# EUROPÄISCHE PATENTANMELDUNG

(11) **EP 3 848 339 A1**
(43) Veröffentlichungstag der Anmeldung: **14.07.2021**
(21) Anmeldenummer: 21150033.5
(22) Anmeldetag: 04.01.2021
(51) Int. Cl.: C04B 26/26, C04B 40/00

(54) **BITUMEN ENTHALTENDE BINDEMITTELEMULSION MIT EINEM FASERFÜLLSTOFF**

(30) Priorität: 10.01.2020 AT 500102020
(71) Anmelder: ÖSTERREICHISCHE VIALIT GESELLSCHAFT mbH, 5280 Braunau/Inn (AT)
(72) Erfinder: Bruckbauer, Alexander, 5280 Braunau am Inn/Dietfurt (AT)
(74) Vertreter: Puchberger & Partner Patentanwälte

(57) **Zusammenfassung**

Die Erfindung betrifft eine Bindemittelemulsion umfassend ein bituminöses Bindemittel, Wasser und einen Emulgator, wobei in der Bindemittelemulsion ein Faserfüllstoff enthalten ist, und wobei der Faserfüllstoff aus Fasern mit einer durchschnittlichen Länge von weniger als 1000 µm, bevorzugt weniger als 500 µm, besteht. Die Erfindung betrifft ferner einen bituminösen Baustoff, einen Straßenbelag, sowie ein Verfahren zur Herstellung einer Bindemittelemulsion.

## Beschreibung

Die vorliegende Erfindung betrifft eine Bindemittelemulsion, die ein bituminöses Bindemittel, Wasser und einen Emulgator enthält, einen bituminösen Baustoff der die Bindemittelemulsion umfasst, sowie einen mit dem Baustoff hergestellten Straßenbelag. Die Erfindung betrifft ferner ein Verfahren zur Herstellung eines bituminösen Baustoffs.

Straßen spielen eine wichtige Rolle, um den Warenverkehr aufrecht zu erhalten. Durch den rasant steigenden Internethandel und durch die immer kürzeren Lieferzeiten wird der Verteilerverkehr vor große Herausforderungen gestellt. Der freie Warenverkehr darf durch schadhafte Verkehrswege nicht beeinträchtigt sein. Durch Sparmaßnahmen, die die Straßenerhalter treffen, sind viele Straßen einem immer größer werdenden Verfall unterworfen.

Um die Wirtschaftsleistung weiterhin aufrechterhalten zu können, muss die Funktionsfähigkeit der Straße erhalten bleiben. Straßen bestehen vorwiegend aus dem Werkstoff Asphalt, also einer Mischung aus Gesteinsmaterial und Bitumen, der in entsprechender Schichtdicke, abgestimmt auf die zu erwartende Verkehrsbelastung, auf einem geeigneten Paket ungebundener Schichten aus Gesteinsmaterialien aufgebracht wird. Im Wesentlichen besteht der Asphalt aus einer weitgehend verformungsresistenten Tragschicht und einer verformungsresistenten und wasserdichten Deckschicht. Diese ist der freien Witterung ausgesetzt. Umwelteinflüsse wie Frost/Tau-Zyklen im Winter, hohe Temperaturen im Sommer, die UV-Strahlung der Sonne und nicht zuletzt die Sauerstoffeinwirkung setzen dem Asphalt, insbesondere dessen Bindemittel, zu. Da nahezu alle Straßen im Winter eis- bzw. schneefrei gehalten werden, fördert auch das ständige Einwirken von Salz ein schnelleres Altern des Bindemittels.

Durch mangelnde finanzielle Mittel für die Reparatur von Straßenbelägen wird davon ausgegangen, dass zum Beispiel in Österreich der Erhaltung des rund eine Milliarde Quadratmeter großen Straßennetzes nicht lückenlos nachgekommen werden kann. Es ist daher von enormer volkswirtschaftlicher Bedeutung, die Erhaltungsarbeiten mit hoch leistungsfähigen dünnen Schichten durchführen zu können. Sind diese dünnen Schichten auch in der Lage, stark ausgemagerte und rissige Straßenoberflächen dauerhaft zu sanieren und das Durchschlagen der Risse hintanzuhalten, so lässt sich die Effizienz der Straßenerhaltung entscheidend steigern.

Im Stand der Technik sind unterschiedliche Auftragsverfahren für bituminöse Baustoffe bekannt.

Asphalt wird vorwiegend mittels Heißasphalt-Technologie bedient. Asphaltmischgut wird mit einer sehr hohen Temperatur hergestellt, im heißen Zustand auf die Baustelle geliefert und mittels Straßenfertiger eingebaut. Im heißen Zustand wird die aufgetragene Mischgutschicht verdichtet, um Hohlräume zu füllen. Nachdem der Belag abgekühlt ist, kann er belastet werden. Asphalt kann auf Grund seiner Eigenschaften nur schichtweise verlegt werden. Je höher die Anforderung, umso höher die Schichtstärke. Auch Deckschichten werden hauptsächlich in dieser Bauweise ausgeführt.

Da alle zugegebenen Stoffe erhitzt werden müssen, ist der Energieeinsatz entsprechend hoch. Deshalb haben sich auch kalt anwendbare Bauverfahren etabliert.

Die kalt aufgetragenen Beläge schützen die Tragschicht zum Beispiel vor Frost/Tau-Perioden, UV-Strahlung, Hitze und Sauerstoffeinwirkung. Die kalt durchführbaren Bauverfahren sind insbesondere die "Oberflächenbehandlung (OB)" (Regelbauweise gemäß EN 12271) und die sogenannten "kalteinbaufähigen Dünnschichtdecken (DDK)" (Regelbauweise gemäß EN 12273).

Die DDK-Technik kann von Frühjahr bis Herbst bei Lufttemperaturen von etwa +10 °C bis etwa +35 °C ohne weitere Energiezufuhr angewendet werden. Dies erfolgt gemäß Stand der Technik insbesondere mit Bindemitteln in Form einer kationischen Bitumenemulsion (gemäß EN 13808) und kornabgestuftem Hartgestein. Diese Bauweise wird beispielsweise in Österreich in der RVS 08.16.05 beschrieben. Die DDK-Technik kann auch bei Straßen mit starker Verkehrsbelastung eingesetzt werden.

Etwa 10 Gew.-% Bitumenemulsion (variabel je nach Größtkorn und lokalen Anforderungen wie Verkehrslastklasse, Klima etc.) werden üblicherweise mit etwa 90 % kornabgestuftem Gesteinsmaterial in einer selbstfahrenden Arbeitsmaschine gemischt und in einem Verteilerkasten in dünner Schicht von üblicherweise 0,5 bis 2 cm Stärke auf die zu bearbeitende Straßenunterlage in Form einer breiförmigen "Asphaltschlämme" verlegt. Das Gesteinsmaterial kann in Abstimmung auf dessen Größtkorn sowie dessen chemische Beschaffenheit einen Gehalt von 3 % bis 13 % eines hochwertigen Füllers (Steinmehl mit <0,063 mm Korngröße) enthalten und kann mit etwa 3 % Wasser vorbefeuchtet sein, um eine Entmischung der Kornzusammensetzung bei Transport, Umschlag und Lagerung zu vermeiden.

Spezialzusätze, wie Tenside und 0,1 bis 2 % Zement (als Abbindebeschleuniger) können als Steuerungsmittel zur Abstimmung auf die aktuelle Tagestemperatur und die Besonderheiten des Gesteins ebenfalls der Mischung zugesetzt werden.

Eine DDK ist in der Regel trotz der ursprünglich flüssig-breiförmigen Konsistenz des Mischgutes durch das Brechen und Abbinden der Bindemittelemulsion und eines rasch stattfindenden Kohäsionsaufbaus des Bindemittelfilmes schon innerhalb etwa einer halben Stunde durch den schonenden Verkehr befahrbar und wird auch durch diesen schrittweise verdichtet. Das Brechen und Abbinden wird durch eine elektrochemische Reaktion (Adsorption, pH-Wert-Verschiebung und chemische Wechselwirkung) zwischen Emulgatorsystem und dem Füllstoff des Mineralkorngemisches eingeleitet.

Eine klassische Verdichtung mit Walzen, wie sie bei der Heißasphalttechnologie unbedingt erforderlich ist, ist weder notwendig noch wäre sie zielführend.

Da technisch bedingt nur eine dünne Schicht erzeugt werden kann, gibt es auch bei diesem Verfahren gewisse Grenzen wie zum Beispiel:
- das Durchschlagen von Rissen innerhalb der Gewährleistungsfrist, Niveauunterschiede können üblicherweise nur bis etwa 15 mm einwandfrei bedient werden,
- der Ausgleich von Spurrinnen ist ebenfalls begrenzt bis zu einer bestimmten Schichtstärke,
- die Festigkeitszunahme wird mit abnehmenden Temperaturen wesentlich verzögert,
- die saisonale Beschränkung der Einbauzeit aufgrund der klimatischen Gegebenheiten durch Verwendung wässriger Komponenten, und
- DDK sind bei starker Verkehrsbeanspruchung nach etwa 10 Jahren durchgefahren.

Die zweite häufig eingesetzte Kaltbaumethode zur Straßenerhaltung bzw. zum Schutz der Asphaltschichten ist die Oberflächenbehandlung. OB-Schichten werden vorwiegend auf Straßenkategorien mit nicht zu hoher Verkehrsbelastung eingesetzt. Der Nachteil der OB-Bauweise liegt darin, dass während der Ausführung durch Auftragen einer Bitumenemulsion mit anschließendem Einstreuen von Mineralkorn in der Einfahrtsphase Rollsplitt entsteht. Des Weiteren ist die Bausaison in mittleren Breiten mit dem zu Ende gehenden Sommer vorbei.

Bei dieser Baumethode wird eine Bitumenemulsion mittels eines fahrbaren Arbeitsgerätes gleichmäßig in einer Schichtstärke von etwa 2 mm direkt auf die Straßenoberfläche aufgetragen. Unmittelbar danach wird mit Hartgesteinskörnern, beispielsweise Korngröße 2 bis 12 mm, abgestreut. Das aufgestreute Mineral wird im Gegensatz zur DDK durch Walzen angedrückt. Das Erreichen der Endfestigkeit ist abhängig von Temperatur und Überrollungen durch den Verkehr. Erfahrungsgemäß kann der Überschusssplitt nach zwei Tagen Einfahrzeit im Sommer abgekehrt werden.

Jedoch erreicht dieses Verfahren auf Grund der sich veränderten klimatischen Verhältnisse und des stetig zunehmenden Schwerverkehrs relativ rasch seine Grenzen.

Das OB-Verfahren ist beispielsweise nicht optimal durchführbar bei
- Verwendung von feinen Abstreusplittkörnungen,
- zu weichen Unterlagen ("Durchfetten"),
- Bindemittelüberdosierung und -unterdosierung,
- zu kurzer Einfahrzeit,
- zu spätem saisonalen Einbauzeitpunkt (d.h. keine Ausbildung des Gesteinsmosaiks möglich),
- starker mechanischer Beanspruchung, wie bei Kreuzungen, Kurven, Steigungen.

Sich ständig ändernde Anforderungen, bedingt durch klimatische Gegebenheiten wie Temperaturspannen von -20 °C im Winter und +35 °C im Sommer, sowie mehrmalige Hitzeperioden, hinterlassen bei OB-Belag eindeutige Gebrauchsspuren. Der ständig wachsende Verkehr und der sich permanent verschlechternde Straßenzustand wirken sich zusätzlich negativ aus. Dies betrifft unter anderem:
- die technischen Probleme bei Verwendung von bevorzugter feiner Absplittkörnung,
- das Durchfetten des Bindemittels bei zu weicher Unterlage oder bei technisch bedingter leichter Überdosierung,
- die zu kurze Einfahrzeit auf Grund einer sich ändernden Wetterlage,
- die Verschiebung der Einfahrzeit in eine für Oberflächenbehandlung ungünstige Jahreszeit,
- die starke mechanische Beanspruchung durch den Schwerlastverkehr in Kreuzungen, Kurven und Steigungen,
- der stärkere Umwelteinfluss auf das Bindemittel, und
- die höhere technische Anforderung an das Bindemittel bedingt durch die Bauweise als Regeneration für stark abgewitterte und zum Teil gerissene Asphaltstraßen (defekte Bausubstanz).

Im Stand der Technik wurde vorgeschlagen, zur Verbesserung der mechanischen Eigenschaften der bituminösen Baustoffe Fasermaterialien als Zusatzstoffe zu verwenden. Hierbei verwendete Fasern sind jedoch üblicherweise mehrere Millimeter lang und oft schwierig mit der Bindemittelemulsion vermischbar, sodass die erzielbaren Gehalte in der Emulsion eingeschränkt sind bzw. die Produkteigenschaften nicht praxistauglich sind.

Ähnliches gilt auch für die Modifikation mit Polymeren und/oder Elastomeren. Je mehr Polymer zugegeben wird desto schlechter werden die chemischen Eigenschaften der Emulsion, also nach dem Aufsprühen und anschließendem Abstreuen mit Gesteinskörnern zeigt das verzögerte Brechen der Emulsion bedingt durch den hohen Polymeranteil ein praxisuntaugliches Erscheinungsbild. Ein hoher Modifizierungsgrad mit bisher angewendeten Polymeren hat auch negative Auswirkung auf die Stabilität der Emulsion während der Verarbeitung.

Die vorliegende Erfindung betrifft somit eine Bindemittelemulsion umfassend ein bituminöses Bindemittel, Wasser und einen Emulgator.

Es ist die Aufgabe der vorliegenden Erfindung, die Nachteile der bituminösen Baustoffe aus dem Stand der Technik zu überwinden und eine Bindemittelemulsion zu schaffen, die eine verbesserte mechanische Widerstandsfähigkeit aufweist.

Die Aufgabe wird dadurch gelöst, dass in der Bindemittelemulsion ein Faserfüllstoff enthalten ist, wobei der Faserfüllstoff aus Fasern mit einer durchschnittlichen Länge von weniger als 1000 µm besteht. Bevorzugt beträgt die durchschnittliche Länge der Fasern weniger als 500 µm. Die kleinste durchschnittliche Länge der Fasern ist gegebenenfalls 10 µm, bevorzugt 100 µm.

Die durchschnittliche Dicke der Fasern kann gegebenenfalls zwischen 5 µm und 50 µm, bevorzugt zwischen 10 µm und 50 µm liegen.

Ein Faserfüllstoff im Sinne der vorliegenden Erfindung kann insbesondere eine Faser oder eine Mischung von Fasern sein, die im Vergleich zu herkömmlichen Fasern sehr kurz sind. Insbesondere kann der Faserfüllstoff gemahlene Fasern umfassen oder aus diesen bestehen. Insbesondere kann eine Bindemittelemulsion von diesen Faserfüllstoff-Aggregaten aufgenommen oder aufgesogen werden. Dadurch wird ein polymeres Netzwerk ausgebildet, in dem die Emulsion und der Faserfüllstoff in einer im Wesentlichen homogenen Mischung vorliegen. In diesem Aspekt kann der erfindungsgemäße Faserfüllstoff von herkömmlichen Faser-Zuschlagstoffen unterschieden werden. Fasern aus dem Stand der Technik bilden keine derartigen Aggregate aus, sodass sich die Bindemittelemulsion um die Fasern herum ansammelt, wodurch es zu einer unvollständigen Inkorporation der Fasern in die Bindemittelemulsion kommt.

Der Faserfüllstoff der Erfindung liegt bevorzugt in Form eines losen Fasergefüges von Fasern, insbesondere von gemahlenen Fasern, vor. In einem derartigen watteähnlichen Fasergefüge haften Einzelfasern durch physikalische Wechselwirkungen aneinander, wodurch besonders große luftgefüllte Freiräume ausgebildet werden. Dadurch hat das Fasergefüge eine niedrige Dichte im Vergleich zu Schüttgütern aus anderweitig zerkleinerten Fasern, beispielsweise gehackten Fasern.

Gemahlene Fasern unterscheiden sich von anderweitig zerkleinerten Fasern, insbesondere von gehackten Fasern, gegebenenfalls durch die Verteilungsfunktion der Faserlänge. Gehackte Fasern weisen im Vergleich zu gemahlenen Fasern üblicherweise eine wesentlich engere Längenverteilung auf. Die Breite der Längenverteilung kann durch den sogenannten Schwankungskoeffizienten angegeben werden, der durch den Quotienten aus Standardabweichung und Mittelwert definiert ist.

Beispielsweise kann der Schwankungskoeffizient der Faserlänge gehackter Fasern zwischen 0,05 und 0,3 liegen. Der Schwankungskoeffizient der Faserlänge von gemahlenen Fasern gemäß der vorliegenden Erfindung kann gegebenenfalls zwischen 0,5 und 2, bevorzugt zwischen 0,5 und 1,5, liegen.

Eine weitere Unterscheidung kann zwischen der Armierung von Mischgut und der Armierung der Emulsion getroffen werden. Bei der Armierung von Mischgut kann Sand bzw. Mörtel mit Fasern modifiziert werden, während bei der Armierung der Emulsion die flüssige Emulsion mit dem Faserfüllstoff vermengt wird.

Ein Unterscheidungsmerkmal zwischen dem erfindungsgemäßen Faserfüllstoff und Partikeln ist die Anisotropie der Einzelfasern des Faserfüllstoffs, die sich auch auf die Verarbeitungseigenschaften auswirken kann.

Es wurde überraschenderweise gefunden, dass die erfindungsgemäßen Faserfüllstoffe eine einfache Modifizierung des Bindemittels erlauben und im Vergleich zum Stand der Technik eine sehr hohe Fasermenge zudosiert werden kann. Die Verarbeitbarkeit des Mischgutes wird trotz der hohen Dosiermenge des Faserfüllstoffs nicht beeinträchtigt. Mit Fasern aus dem Stand der Technik waren höhere Dosiermengen in der Praxis nicht umsetzbar.

Die technische Umsetzung der Erfindung ist ohne hohe Investitionskosten in die Gerätschaft möglich.

Insbesondere besteht der Faserfüllstoff aus gemahlenen Fasern homogen verteilt in Wasser als mittelviskoses Produkt. Dadurch werden die Eigenschaften der Bindemittelemulsion sowohl im kornabgestuften als auch im Monokornmischgut nachhaltig verändert.

Durch das erfindungsgemäße Einbringen von Faserfüllstoffen werden die im Stand der Technik beschriebenen Grenzen der Bauweisen verschoben. Unter anderem ist es erstmals möglich, dass ein Durchschlagen von Rissen aus der Unterlage innerhalb der Gewährleistungsfrist nicht stattfindet, begründet auf der Tatsache, dass ein mit Faserfüllstoff angereichertes Bindemittel gegebenenfalls selbst bei Temperaturen von -20 °C nicht bricht.

Durch das erfindungsgemäße Bindemittel und einen dieses Bindemittel enthaltenden bituminösen Baustoff ist es erstmals möglich,
- Niveauunterschiede in Quer- und Längsrichtung in der Straße, die über 15 mm sind, einwandfrei zu bedienen,
- Spurrinnen bis zu einer Stärke von >20 mm zu verfüllen, und
- eine extrem schnelle Festigkeitszunahme nach Abscheiden des Brechwassers zu erreichen und damit eine raschere Befahrbarkeit und eine höhere Abriebfestigkeit zu erzielen.

Zudem kann die Lebensdauer des Belages entscheidend verlängert werden. Es wurde gezeigt, dass sich nach PAV-(Pressure Ageing Vessel)-Alterung die rheologischen Eigenschaften im Tieftemperaturbereich nicht ändern. Dieses Ergebnis ist bei Bitumenemulsionen aus dem Stand der Technik nicht zu beobachten. Bis dato wurde bei fast allen Modifizierungsmethoden, wie beispielsweise beim Einsatz von Polymeren, eine Versteifung nach Alterung im Tieftemperaturbereich festgestellt.

Es wurde somit festgestellt, dass bei gleich hoher Dosiermenge ein Faserfüllstoff die Eigenschaften der Bitumenmodifikation verbessert. In bevorzugten Ausführungsformen beträgt die durchschnittliche Länge der Einzelfasern des Faserfüllstoffs zwischen 200 µm und 400 µm.

Gegebenenfalls ist vorgesehen, dass das Verhältnis zwischen durchschnittlicher Dicke und durchschnittlicher Länge der Einzelfasern des Faserfüllstoffs zwischen 1:1 und 1:500 liegt, bevorzugt zwischen 1:10 und 1:100. Optional weisen mehr als 95 %, bevorzugt mehr als 99 % der Einzelfasern des Faserfüllstoffs ein Verhältnis zwischen Dicke und Länge zwischen 1:1 und 1:500, bevorzugt zwischen 1:10 und 1:100 auf.

Gegebenenfalls ist vorgesehen, dass der Faserfüllstoff in einem Gehalt zwischen 1 Gew.-% und 20 Gew.-%, bevorzugt zwischen 5 Gew.-% und 15 Gew.-%, in der Bindemittelemulsion enthalten ist.

Gegebenenfalls ist vorgesehen, dass der Schermodul der Bitumenemulsion gemessen nach EN 14770:2012 bei einer Temperatur von 60 °C zwischen 2,5 kPa und 15 kPa, bevorzugt zwischen 5 kPa und 10 kPa, beträgt.

Gegebenenfalls ist vorgesehen, dass die Bitumenemulsion eine polykondensierte Säure, beispielsweise eine polykondensierte organische Sulfonsäure, umfasst.

Der Emulgator kann ausgewählt sein aus einem oder mehreren der folgenden: Alkylamidoamin mit einem Kohlenwasserstoffrest C₁₆ bis C₂₄, gesättigt oder ungesättigt, Säure, bevorzugt Chlorwasserstoffsäure wässrige Dispersion eines Copolymers aus Styrol und 1,3 Butadien.

Die erfindungsgemäße Bindemittelemulsion kann bei einer Temperatur zwischen 5 °C und 40 °C verarbeitbar sein.

Die Bindemittelemulsion kann Bitumen jeglicher Zusammensetzung enthalten, also paraffinischer, naphtenischer, aromatischer oder asphaltenreicher Natur. In Zusammenhang mit der vorliegenden Erfindung sind insbesondere alle stabilen und unstabilen kationischen Bitumenemulsionen verwendbar. Diese können polymermodifiziert oder nicht polymermodifiziert sein.

Die Erfindung betrifft ferner einen bituminösen Baustoff umfassend eine erfindungsgemäße Bindemittelemulsion, sowie wenigstens einen mineralischen Zuschlagstoff.

Gegebenenfalls ist vorgesehen, dass der Zuschlagstoff ein Feststoffgranulat ist oder umfasst, wobei das Feststoffgranulat eine durchschnittliche Korngröße zwischen 0,5 mm und 20 mm aufweist und ausgewählt ist aus einem oder mehreren von: Gesteinsgranulat; Recyclingasphaltgranulat; Polymergranulat.

Gegebenenfalls ist vorgesehen, dass der Zuschlagstoff ein Feststoffpulver ist oder umfasst, wobei das Feststoffpulver eine durchschnittliche Korngröße von kleiner als 0,2 mm, bevorzugt kleiner als 0,1 mm, aufweist.

Es können unterschiedliche Arten von Zuschlagstoffen im Baustoff enthalten sein.

Gegebenenfalls ist vorgesehen, dass der Baustoff zwischen 5 Gew.-% und 20 Gew.-% der Bindemittelemulsion umfasst. Bevorzugt enthält der Baustoff zwischen 0,1 Gew.-% und 2 Gew.-%, stärker bevorzugt zwischen 0,5 Gew.-% und 1,5 Gew.-% Faserfüllstoff.

Gegebenenfalls kann der Faserfüllstoff der Erfindung durch die Schüttdichte des Fasergefüges definiert werden. Die Schüttdichte bezeichnet in Zusammenhang mit der vorliegenden Erfindung die Dichte eines Gemenges aus Fasern und einem zwischen den Fasern angeordneten Fluid, insbesondere Luft.

Ein weiterer relevanter Parameter kann die Feststoffdichte sein. Die Feststoffdichte bezeichnet in Zusammenhang mit der vorliegenden Erfindung die Dichte des Materials der Fasern. Besteht der Faserfüllstoff beispielsweise aus Glasfasern, entspricht die Feststoffdichte der Dichte von Glas.

Die Feststoffdichte des Faserfüllstoffs kann gegebenenfalls ein Vielfaches der Schüttdichte sein. Gegebenenfalls beträgt das Verhältnis zwischen Schüttdichte des Faserfüllstoffs und der Feststoffdichte zwischen 1:2 und 1:20, bevorzugt zwischen 1:3 und 1:15. Dieses Verhältnis ist gegebenenfalls abhängig vom Material des Faserfüllstoffs.

Die Dichte des Fasergefüges kann beispielsweise zwischen 0,05 g/cm³ und 0,6 g/cm³ betragen.

Gegebenenfalls umfasst der Faserfüllstoff organische Fasern, anorganische Fasern, und/oder Naturfasern. Ein Beispiel für organische Fasern sind Polymerfasern, etwa Polyacrylnitril-Fasern oder Nylon-Fasern. Beispiele für anorganische Fasern sind Glasfasern oder Mineralfasern, beispielsweise Basalt-Fasern. Beispiele für Naturfasern sind Baumwollfasern und Cellulosefasern. Insbesondere kann vorgesehen sein, dass Einzelfasern des Faserfüllstoffs organische Fasern, anorganische Fasern, und/oder Naturfasern umfassen.

Ein Faserfüllstoff aus Naturfasern kann gegebenenfalls unverarbeitete Fasern, also insbesondere nicht gemahlene Fasern, enthalten und dennoch die für einen erfindungsgemäßen Faserfüllstoff notwendigen Anforderungen erfüllen.

Die Erfindung betrifft ferner einen Straßenbelag umfassend eine erfindungsgemäße Bindemittelemulsion und/oder einen erfindungsgemäßen Baustoff.

Die Erfindung betrifft ferner ein Verfahren zur Herstellung einer Bindemittelemulsion umfassend die Schritte: Bereitstellen einer Bindemittelemulsion umfassend ein bituminöses Bindemittel, Wasser und einen Emulgator; und Einmischen eines Faserfüllstoffs in die Bindemittelemulsion, wobei der Faserfüllstoff aus Fasern mit einer durchschnittlichen Länge von weniger als 1000 µm, bevorzugt weniger als 500 µm, besteht.

Gegebenenfalls ist vorgesehen, dass das Einmischen des Faserfüllstoffs in Form einer wässrigen Suspension des Faserfüllstoffs erfolgt.

Gegebenenfalls ist vorgesehen, dass die wässrige Suspension zwischen 1 Gew.-% und 40 Gew.-%, bevorzugt zwischen 5 Gew.-% und 30 Gew.-%, des Faserfüllstoffs enthält.

Gegebenenfalls ist vorgesehen, dass die wässrige Suspension durch kontinuierliches Einmischen des Faserfüllstoffs in einen Flüssigkeitsstrom gebildet wird.

Gegebenenfalls ist vorgesehen, dass der Flüssigkeitsstrom Wasser und ein im Wasser gelöstes Netzmittel umfasst oder daraus besteht, wobei das Netzmittel eine polykondensierte Säure, insbesondere eine polykondensierte organische Sulfonsäure, umfasst oder daraus besteht.

Die Bitumenemulsion bzw. der Baustoff der Erfindung können unter anderem in folgenden Verarbeitungsverfahren eingesetzt werden: Dünne Decke kalt (DDK), Oberflächenbehandlung (OB), Dickschichtasphalt, Reparaturasphalt.

In Ausführungsbeispielen für DDK-Material können in einem erfindungsgemäßen bituminösen Baustoff etwa 1000 kg kornabgestuftes Mineral, 50 bis 100 kg Wasser, 5 bis 10 kg fein verteilter Faserfüllstoff, 100 bis 150 kg Bitumenemulsion und 5 bis 10 kg Zement enthalten sein. Eine Variation der Wasser-, Bitumenemulsions- und Zementmenge kann abhängig vom Zustand des vorhandenen Straßenbelags durchgeführt werden.

In Ausführungsbeispielen für OB-Material können in einem erfindungsgemäßen Bindemittel 1,5 bis 10,0 kg unstabile modifizierte und/oder nicht modifizierte Oberflächenemulsion, sowie 0,01 - 2,0 kg mit Wasser vorbenetzter Faserfüllstoff (50 % Faserfüllstoff im Wasser) enthalten sein. Zum Bilden eines erfindungsgemäßen Baustoffs kann diese Mischung nach dem Auftrag auf eine Straßenoberfläche mit 0,1 - 50 kg Einstreukörnungen ausgewählt aus den Kornklassen 1-3 mm, 2-4 mm, 4-8 mm, 8-11 mm, 11-16 mm, 16-32 mm, 32-45 mm, oder beliebigen Kombinationen daraus abgestreut werden.

In Ausführungsbeispielen für Dickschichtbelag kann ein erfindungsgemäßer bituminöser Baustoff etwa 1000 kg kornabgestuftes Recyclingasphalt-Material, 0,1 bis 40 kg Fluxbindemittel (biogener Rohstoffanteil 30 Gew.-% bis 100 Gew.-%), sowie 0,1 bis 5 kg mit Wasser vorbenetzten Faserfüllstoff (50 % Faserfüllstoff im Wasser) enthalten.

In Ausführungsbeispielen für ein Reparaturasphaltmischgut kann ein erfindungsgemäßer bituminöser Baustoff etwa 1000 kg kornabgestuftes Gestein, 0,1 bis 100 kg Fluxbindemittel (insbesondere gemäß ÖNORM B 3508), sowie 0,1 bis 5 kg mit Wasser vorbenetzten Faserfüllstoff (50 % Faserfüllstoff im Wasser) enthalten. Das kornabgestufte Gestein kann ausgewählt sein aus einer Kornklasse zwischen 0 bis 1 mm und 0 bis 45 mm. Die Verarbeitungstemperatur kann zwischen 80 und 120 °C liegen.

Weitere Merkmale der Erfindung ergeben sich aus den Patentansprüchen, den Figuren und den Ausführungsbeispielen. Nachfolgend wird die Erfindung durch exemplarische Ausführungsbeispiele im Detail erläutert.

Es zeigen:
Fig. 1 den Phasenwinkel einer erfindungsgemäßen Bindemittelemulsion in Abhängigkeit von der Temperatur im Vergleich zu einer nicht erfindungsgemäßen Bindemittelemulsion;
Fig. 2 den Schermodul einer erfindungsgemäßen Bindemittelemulsion in Abhängigkeit von der Temperatur im Vergleich zu einer nicht erfindungsgemäßen Bindemittelemulsion;
Fig. 3 eine mikroskopische Aufnahme eines erfindungsgemäßen Faserfüllstoffs;
Fig. 4 eine mikroskopische Aufnahme eines Polymergranulats;
Fig. 5 eine mikroskopische Aufnahme von geschnittenen Polymerfasern.

### Beispiel 1: Dünne Decke kalt (DDK) mit kornabgestuftem Material

In einem ersten erfindungsgemäßen Ausführungsbeispiel wird ein bituminöser Baustoff zur Verwendung im DDK-Verfahren hergestellt. Die Komponenten des Baustoffs sind in Tabelle 1 angegeben.

**Tabelle 1: Komponenten des Baustoffs gemäß dem ersten Ausführungsbeispiel der Erfindung**

| **Komponente** | **Gew.-%** |
|---|---|
| Bitumenemulsion Typ C 65 BP 7-DDK⁽¹⁾ | 9,7 |
| Wasser | 9,5 |
| Nylon-Faserfüllstoff⁽²⁾ | 0,55 |
| Mineral kornabgestuft⁽³⁾ | 79,7 |
| Zement | 0,55 |
| ⁽¹⁾ gemäß ÖNORM B 3508:2014, Tabelle 6 | |
| ⁽²⁾ Größenverteilung 0,1 µm bis 400 µm, durchschnittliche Faserlänge 230 µm, Dicke etwa 15 µm | |
| ⁽³⁾ Edelbrechkörnung gem. RVS 08.16.05 von 0 bis 11 mm | |

Zur Herstellung eines bituminösen Baustoffs wird die Bitumenemulsion bereitgestellt und mit einer Suspension des Faserfüllstoffs in Wasser vermengt. Vor der Vermengung werden die Bitumenemulsion und die Suspension in getrennten Lagerbehältern aufbewahrt.

Kurz vor dem Auftrag auf eine Straßenoberfläche wird die so gebildete modifizierte Bitumenemulsion mit kornabgestuften Mineral und Zement abgemischt. Die Menge an Wasser, Bitumenemulsion und Zement kann abhängig von Straßenzustand und Umweltbedingungen variiert werden.

### Beispiel 2: Dünne Decke kalt (DDK) mit Recyclingasphalt

In einem zweiten erfindungsgemäßen Ausführungsbeispiel werden zwei weitere bituminöse Baustoffe zur Verwendung im DDK-Verfahren hergestellt. Diese Baustoffe dienen zum Ausgleichen großer Unebenheiten in Straßenbelägen als Profilschicht. Die Profilschicht wird mit einer Deckschicht versiegelt. Die Deckschicht ist eine erfindungsgemäße Zusammensetzung für einen bituminösen Baustoff.

Die Komponenten der Baustoffe sind in Tabelle 2 angegeben.

**Tabelle 2: Komponenten des Baustoffs gemäß dem zweiten Ausführungsbeispiel der Erfindung**

| **Komponente** | **Gew.-%** |
|---|---|
| *Profilschicht* | |
| Bitumenemulsion Typ C 65 BP 7-DDK⁽¹⁾ | 9,0 |
| Zement | 0,50 |
| Recyclingasphalt-Material⁽²⁾ | 90,5 |

| *Deckschicht* | |
|---|---|
| Mineral kornabgestuft⁽³⁾ | 78,7 |
| Wasser | 7,99 |
| PAN-Faserfüllstoff⁽⁴⁾ | 0,70 |
| Sulfonsäure | 0,01 |
| Bitumenemulsion Typ C 65 BP 7-DDK⁽¹⁾ | 11,8 |
| Zement | 0,80 |
| ⁽¹⁾ gemäß ÖNORM B 3508:2014, Tabelle 6 | |
| ⁽²⁾ aus Fräsgut, klassiert und gesiebt auf 2 bis 11 mm, mit etwa 2 Gew.-% Feuchte | |
| ⁽³⁾ Edelbrechkörnung gem. RVS 08.16.05 von 0 bis 11 mm | |
| ⁽⁴⁾ Größenverteilung 0,1 µm bis 400 µm, durchschnittliche Faserlänge 180 µm, Dicke etwa 17 µm, Schüttdichte etwa 0,11 g/cm³ | |

Das Verhältnis zwischen Schüttdichte und Feststoffdichte beträgt in diesem Ausführungsbeispiel etwa 1:11.

Für die Profilschicht werden alle Komponenten vermischt und bei vorherrschender Umgebungstemperatur eingebaut.

Zur Herstellung der Deckschicht werden Mineral, Zement, Polyacrylnitril-(PAN)-Faserfüllstoff, Wasser mit einer darin gelösten polykondensierten organischen Sulfonsäure, sowie die Bitumenemulsion in getrennten Lagerbehältern aufbewahrt. Wasser und Bitumenemulsion werden vermengt, wobei vor der Vermengung der Faserfüllstoff mit einem Rohrmischer direkt in die Wasser-Versorgungsleitung eingemengt wird. Die Sulfonsäure dient als Netzmittel, um eine rasche Vermischung von Wasser und Faserfüllstoff zu ermöglichen.

Nach der Mischung von Wasser, Faserfüllstoff und Bitumenemulsion werden kurz vor dem Einbau der Deckschicht Mineral und Zement eingemengt.

Die Menge an Wasser, Bitumenemulsion und Zement kann abhängig von Straßenzustand und Umweltbedingungen variiert werden.

### Beispiel 3: Oberflächenbehandlung (OB)

In einem dritten erfindungsgemäßen Ausführungsbeispiel wird ein bituminöser Baustoff zur Verwendung im OB-Verfahren hergestellt. Die Komponenten des Baustoffs sind in Tabelle 3 angegeben.

**Tabelle 3: Komponenten des Baustoffs gemäß dem dritten Ausführungsbeispiel der Erfindung**

| **Komponente** | **Gew.-%** |
|---|---|
| nicht modifizierte Bitumenemulsion | 16,1 |
| PAN-Faserfüllstoff in Wasser⁽¹⁾ | 3,3 |
| Mineral kornabgestuft⁽²⁾ | 80,6 |
| ⁽¹⁾ Größenverteilung 0,1 µm bis 400 µm, durchschnittliche Faserlänge 180 µm, Dicke etwa 17 µm, Schüttdichte etwa 0,11 g/cm³, 50 Gew.-% Füllstoff in Wasser | |
| ⁽²⁾ Einstreukörnungen der Kornklasse 2-16 mm | |

Zur Herstellung einer erfindungsgemäßen Bitumenemulsion wird die Bitumenemulsion mit dem PAN-Faserfüllstoff in Wasser vermischt und auf die Straßenoberfläche aufgetragen. Anschließend wird mit dem Mineral abgestreut, um einen Straßenbelag nach dem OB-Verfahren zu bilden.

Die Einbaumengen pro Quadratmeter können zwischen 1,5 und 10,0 kg der nicht modifizierten Oberflächenemulsion, zwischen 0,01 und 2,0 kg des Faserfüllstoffs in Wasser und zwischen 0,1 - 50 kg des Minerals betragen.

### Beispiel 4: Dickschichtbelag

In einem vierten erfindungsgemäßen Ausführungsbeispiel wird ein bituminöser Baustoff zur Verwendung als Dickschichtbelag hergestellt. Dieser ist zur Herstellung einer Schichtstärke von mehr als 15 mm bis zu 500 mm geeignet. Die Komponenten des Baustoffs sind in Tabelle 4 angegeben.

**Tabelle 4: Komponenten des Baustoffs gemäß dem vierten Ausführungsbeispiel der Erfindung**

| **Komponente** | **Gew.-%** |
|---|---|
| Recyclingasphalt-Material⁽¹⁾ | 95 |
| Fluxbindemittel⁽²⁾ | 2,0 |
| PAN-Faserfüllstoff in Wasser⁽³⁾ | 3,0 |
| ⁽¹⁾ kornabgestuft, aus gebrochenen Asphaltschollen oder Fräsmaterial, Korngröße 0 bis 50 mm | |
| ⁽²⁾ biogener Rohstoffanteil 100 Gew.-% | |
| ⁽³⁾ Größenverteilung 0,1 µm bis 400 µm, durchschnittliche Faserlänge 180 µm, Dicke etwa 17 µm, Schüttdichte etwa 0,11 g/cm³, 50 Gew.-% Füllstoff in Wasser | |

Zur Herstellung eines erfindungsgemäßen Baustoffs wird das Fluxbindemittel mit dem PAN-Faserfüllstoff in Wasser vermischt. Anschließend das Recyclingasphalt-Material zugegeben, um den Baustoff zu bilden. Durch das Fluxbindemittel wird das im Recyclingasphalt-Material enthaltene Bitumen gelöst und bildet gemeinsam mit dem im Recyclingasphalt-Material enthaltenen Wasser eine Emulsion.

Der Baustoff kann einlagig entweder händisch oder mit einem Straßenbaufertiger verlegt werden.

### Beispiel 5: Reparaturasphaltmischgut

In einem fünften erfindungsgemäßen Ausführungsbeispiel wird ein bituminöser Baustoff zur Verwendung als Reparaturasphaltmischgut hergestellt. Dieser ist zur Herstellung einer Schichtstärke von mehr als 5 mm bis zu 1000 mm geeignet. Die Komponenten des Baustoffs sind in Tabelle 5 angegeben.

**Tabelle 5: Komponenten des Baustoffs gemäß dem fünften Ausführungsbeispiel der Erfindung**

| **Komponente** | **Gew.-%** |
|---|---|
| Gestein kornabgestuft⁽¹⁾ | 98 |
| Fluxbindemittel⁽²⁾ | 1,0 |
| PAN-Faserfüllstoff in Wasser⁽³⁾ | 1,0 |
| ⁽¹⁾ Kornklasse 0 bis 20 mm Materialtemperatur etwa 100 °C | |
| ⁽²⁾ gem. ÖNORM B 3508 | |
| ⁽³⁾ Größenverteilung 0,1 µm bis 400 µm, durchschnittliche Faserlänge 180 µm, Dicke etwa 17 µm, Schüttdichte etwa 0,11 g/cm³, 50 Gew.-% Füllstoff in Wasser | |

Zur Herstellung eines erfindungsgemäßen Baustoffs wird das Fluxbindemittel mit dem PAN-Faserfüllstoff in Wasser vermischt. Anschließend das Gestein zugegeben, um den Baustoff zu bilden.

### Beispiel 6: Prüfung der rheologischen Eigenschaften

In diesem Ausführungsbeispiel wurden die rheologischen Eigenschaften, insbesondere das komplexe Schermodul und der Phasenwinkel einer erfindungsgemäßen Bitumenemulsion bestimmt und mit einer Bitumenemulsion nach dem Stand der Technik (nicht erfindungsgemäß) verglichen. Die Bestimmungen wurden nach EN 14770:2012 durchgeführt.

Die Zusammensetzungen der getesteten Bitumenemulsionen (sechstes Ausführungsbeispiel und nicht erfindungsgemäßes Vergleichsbeispiel) sind in Tabelle 6 gezeigt.

**Tabelle 6: Komponenten der getesteten Bitumenemulsionen**

| **Komponente** | **Gew.-%** | |
|---|---|---|
| | **Beispiel 6⁽²⁾** | **Vergleichsbeispiel⁽³⁾** |
| PAN-Faserfüllstoff⁽¹⁾ | 9,2 | 0,0 |
| Bitumenemulsion Typ C 65 BP 7-DDK | 90,8 | 100 |
| ⁽¹⁾ Größenverteilung 0,1 µm bis 400 µm, durchschnittliche Faserlänge 180 µm, Dicke etwa 17 µm, Schüttdichte etwa 0,11 g/cm³ | | |
| ⁽²⁾ erfindungsgemäß | | |
| ⁽³⁾ nicht erfindungsgemäß | | |

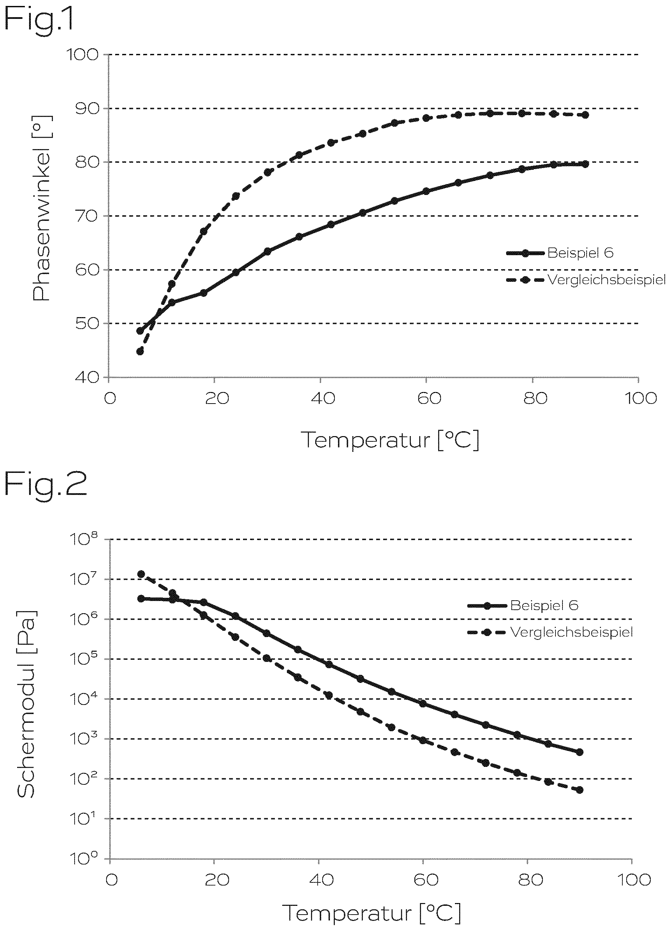

Fig. 1 zeigt den Verlauf des Phasenwinkels und Fig. 2 den Verlauf des Schermoduls der beiden getesteten Emulsionen, jeweils in Abhängigkeit von der Temperatur.

Es ist erkennbar, dass mit der erfindungsgemäßen Emulsion Festigkeitswerte (Schermodul) und Fließverhalten (Phasenwinkel) erreicht werden können, die im Vergleich zu Bitumenemulsionen aus dem Stand der Technik vorteilhaft sind.

Die Rheologieergebnisse der erfindungsgemäßen Bitumenemulsion zeigen, dass das Schermodul ab einer Temperatur von 20 °C um ein Vielfaches erhöht wird. Hierbei ist die logarithmische Skalierung der Fig. 2 zu beachten.

Rheologische Erkenntnisse aus dieser Überprüfung ermöglichen derzeit nicht durchführbare Baumethoden. Erstmals können beispielweise feinere Körnungen auch auf einer weicheren Unterlage eingesetzt werden, ohne bei Über- oder Unterdosierung des Bindemittels mit Schäden rechnen zu müssen. Da sich das Fasernetzwerk im Bitumen schon nach dem Verdunsten des Wassers ausbildet erfährt der Belag eine rasante Festigkeitsentwicklung.

Zusätzlich wurde gefunden, dass die Tieftemperatureigenschaften positiv verändert werden, sodass eine erfindungsgemäße Bitumenemulsion bei -20 °C ein ähnliches Verhalten zeigt, wie eine herkömmliche Bitumenemulsion bei +20 °C. Beispielsweise kann eine etwa 3 mm starke Bindemittelschicht aus einer herkömmlichen Bitumenemulsion erst bei +20 °C rissfrei über einen Dorn gebogen werden, wohingegen eine erfindungsgemäße Bitumenemulsion diese Prüfung schon bei -20 °C rissfrei durchläuft. Würde man bei dieser tiefen Temperatur eine herkömmliche Emulsion über den Dorn biegen, zerbricht sie vollkommen. Eine Ursache für diesen Effekt kann ein in der erfindungsgemäßen Mischung homogen verteiltes und zusammenhängendes Fasernetzwerk sein. Es wird davon ausgegangen, dass eine längere Faser nicht in der Lage ist, mit dem Bitumen ein derartig zusammenhängendes Netzwerk aufzubauen.

Es wurde ferner festgestellt, dass der Faserfüllstoff weder den Stabilitätsgrad der Emulsion noch dessen Lagerfähigkeit beeinträchtigt. Es konnte sogar nachgewiesen werden, dass die nach längerer Lagerdauer eintretende Sedimentation der größeren Emulsionströpfchen hintangehalten werden kann. Dies ermöglicht einen geringeren Homogenisierungsaufwand nach längerer Lagerdauer und vor Verarbeitung.

### Beispiel 7: Vergleich zwischen Faserfüllstoff, Granulat und geschnittener Faser

In diesem Ausführungsbeispiel wurde die Morphologie eines erfindungsgemäßen gemahlenen Faserfüllstoffs mit der Morphologie eines Polymergranulats und von gehackten Polymerfasern verglichen.

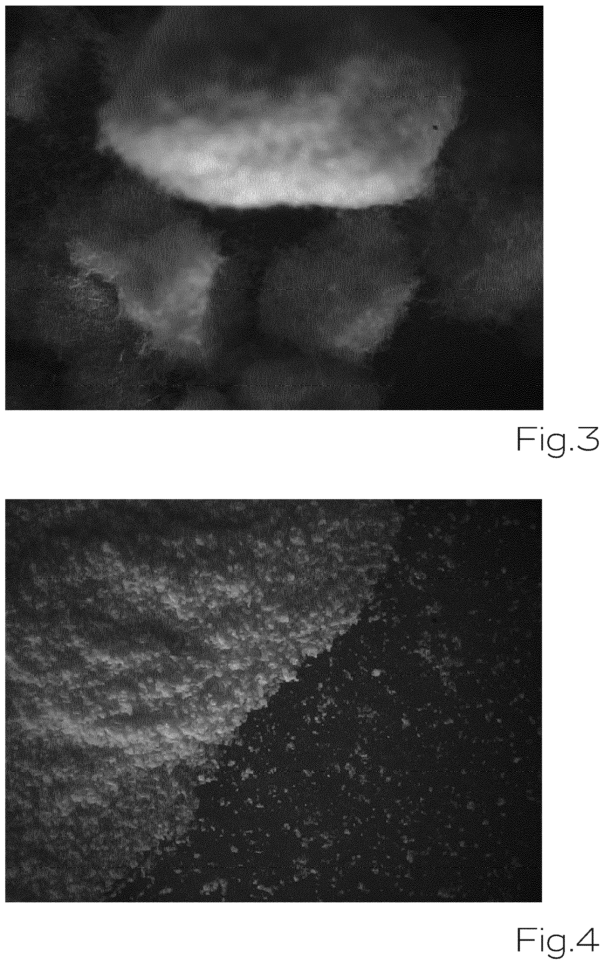

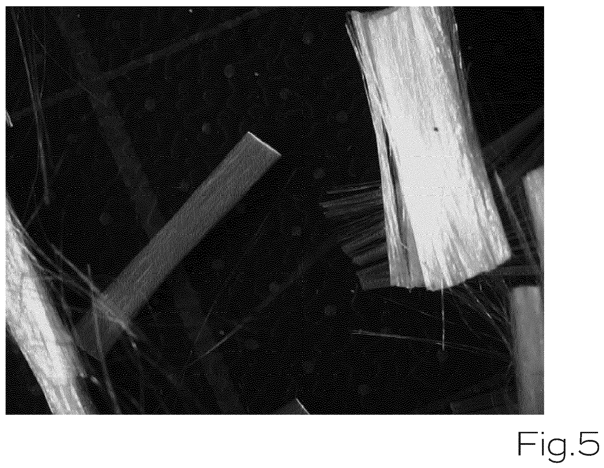

Fig. 3 zeigt einen erfindungsgemäßen Faserfüllstoff aus gemahlenen Polymerfasern mit einer Faserlänge zwischen 0,1 µm und 200 µm bei 100-facher Vergrößerung. Fig. 4 zeigt ein Polymergranulat mit einem durchschnittlichen Korndurchmesser von etwa 100 µm bei 100-facher Vergrößerung. Fig. 5 zeigt eine geschnittene Polymerfaser mit einer durchschnittlichen Faserlänge von etwa 2mm bei 100-facher Vergrößerung.

In den Fig. 3, 4 und 5 ist erkennbar, dass der erfindungsgemäße Faserfüllstoff eine watteähnliche Form aufweist. Im Unterschied dazu liegt das Granulat als rieselfähiges Schüttgut vor und die geschnittenen Fasern liegen als Faserbündel vor.

## Patentansprüche

1. **Bindemittelemulsion** umfassend ein bituminöses Bindemittel, Wasser und einen Emulgator, **dadurch gekennzeichnet, dass** in der Bindemittelemulsion ein Faserfüllstoff enthalten ist, wobei der Faserfüllstoff aus Fasern mit einer durchschnittlichen Länge von weniger als 1000 µm, bevorzugt weniger als 500 µm, besteht.

2. Bindemittelemulsion nach Anspruch 1, **dadurch gekennzeichnet, dass** das Verhältnis zwischen durchschnittlicher Dicke und durchschnittlicher Länge der Fasern zwischen 1:1,5 und 1:500 liegt, bevorzugt zwischen 1:2 und 1:50.

3. Bindemittelemulsion nach Anspruch 1 oder 2, **dadurch gekennzeichnet, dass** die Fasern Kunststofffasern sind, insbesondere ausgewählt aus einem oder mehreren von: Polyacrylnitril, Nylon, Polyester, Polypropylen, dass die Fasern anorganische Fasern, insbesondere Mineralfasern und/oder Glasfasern, sind, und/oder dass die Fasern Naturfasern sind, insbesondere ausgewählt aus einem oder mehreren von: Cellulosefasern, Baumwollfasern.

4. Bindemittelemulsion nach einem der Ansprüche 1 bis 3, **dadurch gekennzeichnet, dass** der Faserfüllstoff in einem Gehalt zwischen 1 Gew.-% und 20 Gew.-%, bevorzugt zwischen 5 Gew.-% und 15 Gew.-%, in der Bindemittelemulsion enthalten ist.

5. Bindemittelemulsion nach einem der Ansprüche 1 bis 4, **dadurch gekennzeichnet, dass** der Schermodul der Bitumenemulsion gemessen nach EN 14770:2012 bei einer Temperatur von 60 °C zwischen 2,5 kPa und 15 kPa, bevorzugt zwischen 5 kPa und 10 kPa, beträgt.

6. Bindemittelemulsion nach einem der Ansprüche 1 bis 5, **dadurch gekennzeichnet, dass** die Bitumenemulsion eine polykondensierte Säure, insbesondere eine polykondensierte organische Sulfonsäure, umfasst.

7. Bindemittelemulsion nach einem der Ansprüche 1 bis 6, **dadurch gekennzeichnet, dass** die Fasern des Faserfüllstoffs als loses Fasergefüge mit einem Verhältnis von Schüttdichte zu Feststoffdichte von 1:2 bis 1:20 vorliegen.

8. **Bituminöser Baustoff** umfassend eine Bindemittelemulsion nach einem der Ansprüche 1 bis 7, sowie wenigstens einen mineralischen Zuschlagstoff.

9. Baustoff nach Anspruch 8, **dadurch gekennzeichnet, dass** der Zuschlagstoff ein Feststoffgranulat ist oder umfasst, wobei das Feststoffgranulat eine durchschnittliche Korngröße zwischen 0,5 mm und 20 mm aufweist und ausgewählt ist aus einem oder mehreren von:
- Gesteinsgranulat,
- Recyclingasphaltgranulat,
- Polymergranulat.

10. Baustoff nach Anspruch 8 oder 9, **dadurch gekennzeichnet, dass** der Zuschlagstoff ein Feststoffpulver ist oder umfasst, wobei das Feststoffpulver eine durchschnittliche Korngröße von kleiner als 0,2 mm, bevorzugt kleiner als 0,1 mm, aufweist.

11. Baustoff nach einem der Ansprüche 8 bis 10, **dadurch gekennzeichnet, dass** der Baustoff zwischen 5 Gew.-% und 20 Gew.-% der Bindemittelemulsion umfasst.

12. **Straßenbelag** umfassend eine Bindemittelemulsion nach einem der Ansprüche 1 bis 6 und/oder einen Baustoff nach einem der Ansprüche 8 bis 11.

13. **Verfahren** zur Herstellung einer Bindemittelemulsion umfassend die Schritte:
- Bereitstellen einer Bindemittelemulsion umfassend ein bituminöses Bindemittel, Wasser und einen Emulgator, und
- Einmischen eines Faserfüllstoffs in die Bindemittelemulsion, wobei der Faserfüllstoff aus Fasern mit einer durchschnittlichen Länge von weniger als 1000 µm, bevorzugt weniger al 500 µm, besteht.

14. Verfahren nach Anspruch 13, **dadurch gekennzeichnet, dass** das Einmischen des Faserfüllstoffs in Form einer wässrigen Suspension des Faserfüllstoffs erfolgt.

15. Verfahren nach Anspruch 14, **dadurch gekennzeichnet, dass** die wässrige Suspension zwischen 1 Gew.-% und 40 Gew.-%, bevorzugt zwischen 5 Gew.-% und 30 Gew.-%, des Faserfüllstoffs enthält.

16. Verfahren nach Anspruch 14 oder 15, **dadurch gekennzeichnet, dass** die wässrige Suspension durch kontinuierliches Einmischen des Faserfüllstoffs in einen Flüssigkeitsstrom gebildet wird.

17. Verfahren nach Anspruch 16, **dadurch gekennzeichnet, dass** der Flüssigkeitsstrom Wasser und ein im Wasser gelöstes Netzmittel umfasst oder daraus besteht, wobei das Netzmittel eine polykondensierte Säure, insbesondere eine polykondensierte organische Sulfonsäure, umfasst oder daraus besteht.
